(19) Europäisches Patentamt
European Patent Office
Office européen des brevets

(11) Veröffentlichungsnummer: **0 185 935 B1**

(12) # EUROPÄISCHE PATENTSCHRIFT

(45) Veröffentlichungstag der Patentschrift: **13.05.92**

(51) Int. Cl.5: **C08F 8/00**, C08F 26/02

(21) Anmeldenummer: **85114796.7**

(22) Anmeldetag: **21.11.85**

Die Akte enthält technische Angaben, die nach dem Eingang der Anmeldung eingereicht wurden und die nicht in dieser Patentschrift enthalten sind.

(54) **Verfahren zur Herstellung von pulverförmigen, linearen, basischen Polymerisaten.**

(30) Priorität: **29.11.84 DE 3443461**

(43) Veröffentlichungstag der Anmeldung:
**02.07.86 Patentblatt 86/27**

(45) Bekanntmachung des Hinweises auf die Patenterteilung:
**13.05.92 Patentblatt 92/20**

(84) Benannte Vertragsstaaten:
**AT BE CH DE FR GB IT LI NL SE**

(56) Entgegenhaltungen:
**EP-A- 0 071 050**
**DE-A- 1 817 309**
**US-A- 4 018 826**

(73) Patentinhaber: **BASF Aktiengesellschaft**
**Carl-Bosch-Strasse 38**
**W-6700 Ludwigshafen(DE)**

(72) Erfinder: **Brunnmueller, Fritz, Dr.**
**Alsenzstrasse 7**
**W-6703 Limburgerhof(DE)**
Erfinder: **Kroener, Michael, Dr.**
**Eislebener Weg 8**
**W-6800 Mannheim 31(DE)**
Erfinder: **Hartmann, Heinrich, Dr.**
**Weinheimer Strasse 46**
**W-6703 Limburgerhof(DE)**
Erfinder: **Linhart, Friedrich, Dr.**
**Richard-Kuhn-Strasse 37**
**W-6900 Heidelberg(DE)**
Erfinder: **Pfitzner, Klaus, Dr.**
**Liebermannstrasse 6**
**W-6700 Ludwigshafen(DE)**

EP 0 185 935 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der EP-Patentanmeldung 71050 sind lineare, basische Polymerisate bekannt, die gekennzeichnet sind durch einen Gehalt an 90 bis 10 Mol.% Einheiten der Formel

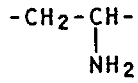
(I)

und 10 bis 90 Mol.% Einheiten der Formel

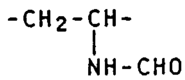
(II)

und einen K-Wert nach Fikentscher von 10 bis 200 (gemessen in 0,5 %iger wäßriger Kochsalzlösung bei 25 °C) haben. Diese Polymerisate werden dadurch hergestellt, daß man zunächst N-Vinylformamid in Gegenwart von radikalischen Polymerisationsinitiatoren zu Polyvinylformamiden polymerisiert und die so erhaltenen Polymerisate bei Temperaturen von 20 bis 200 °C in Gegenwart von Säuren oder Basen unter Abspaltung von 10 bis 90 % der Formylgruppen aus dem Homopolymerisat des N-Vinylformamids in Wasser, Alkoholen, Ammoniak und Aminen oder Mischungen der genannten Lösemittel solvolysiert. Die Abspaltung der Formylgruppe erfolgt dabei vorzugsweise in wäßriger Lösung mit Natronlauge oder Salzsäure. Versucht man, Polymerisate des N-Vinylformamids, die nach dem Verfahren der umgekehrten Suspensionspolymerisation hergestellt werden und in Pulverform vorliegen, partiell mit wäßriger Salzsäure zu hydrolysieren, so erhält man keine brauchbaren Produkte, weil die Teilchen unter den Bedingungen der Hydrolyse zu einer festen Masse miteinander verkleben.

Der vorliegenden Erfindung liegt die Aufgabe zugrunde, ein Verfahren zur Herstellung von pulverförmigen, linearen, basischen Polymerisaten zur Verfügung zu stellen, die Vinylamin-Einheiten einpolymerisiert enthalten.

Die Aufgabe wird erfindungsgemäß mit einem Verfahren zur Herstellung von pulverförmigen, linearen, basischen Polymerisaten, die Einheiten der Formel

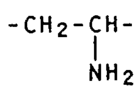
(I)

enthalten und einen K-Wert nach Fikentscher von 10 bis 250 (gemessen bei einer Polymerkonzentration von 0,5 Gew.% in 5 %iger wäßriger Kochsalzlösung bei 25 °C) haben, durch Abspaltung der Formylgruppe aus Polymerisaten des N-Vinylformamids ($CH_2$ = CH-NH-CHO) in Gegenwart von Säuren bei Temperaturen bis zu 200 °C dadurch gelöst, daß man pulverförmige Polymerisate des N-Vinylformamids in Gegenwart von höchstens 5 Gew.% Wasser mit einer gasförmigen Halogenwasserstoffsäure zur Reaktion bringt.

Man geht bei diesem Verfahren von pulverförmigen Polymerisaten des N-Vinylformamids aus und setzt sie vorzugsweise in Gegenwart von höchstens 2,5 Gew.% Wasser, bezogen auf Polymerisat, oder unter Ausschluß von Wasser mit gasförmigen Halogenwasserstoffsäuren um. Als Halogenwasserstoffsäuren kommen vorzugsweise Chlorwasserstoff oder Bromwasserstoff in Betracht. Die Halogenwasserstoffsäuren werden dabei in wasserfreiem Zustand mit den Festprodukten in Kontakt gebracht. Unter diesen Reaktionsbedingungen kommt es zu einer Abspaltung von Kohlenmonoxid. Die Reaktion verläuft über eine Decarbonylierung, wenn unter Ausschluß von Wasser bzw. bei einem Wassergehalt von höchstens 2,5 Gew.% gearbeitet wird. Um einen solch niedrigen Wassergehalt in den Polymerisaten zu erreichen, müssen diejenigen Polymerisate des N-Vinylformamids, die nach dem Verfahren der umgekehrten Suspensionspolymerisation hergestellt werden, zunächst getrocknet werden. Das Trocknen der Polymerisatperlen, die bei

dem Verfahren der umgekehrten Suspensionspolymerisation anfallen, ist Stand der Technik und wird vorzugsweise mit Hilfe einer azeotropen Destillation erreicht. Nach dem Verfahren der umgekehrten Suspensionspolymerisation erhält man vor allem sehr hochmolekulare Polymerisate, die einen K-Wert bis zu 250 aufweisen. Stehen für die Solvolyse lediglich Lösungspolymerisate zur Verfügung, die beispielsweise in den Beispielen der EP-PS 71050 beschrieben sind, so ist es zunächst erforderlich, das Wasser zu entfernen und die Polymerisatmasse auf die gewünschte Korngröße zu zerkleinern. Man kann auch von Fällungspolymerisaten ausgehen, die man durch Polymerisieren von N-Vinylformamid in Alkoholen wie Ethanol, Isopropanol oder tert.-Butanol erhält. Die Alkohole wirken als Regler und ergeben Polymerisate, die ein niedriges Molekulargewicht haben, z.B. entsprechend einem K-Wert von 20. Vorzugsweise geht man von pulverförmigen Poly-N-Vinylformamiden aus, die nach dem Verfahren der Fällungspolymerisation oder nach dem Verfahren der umgekehrten Suspensionspolymerisation erhalten werden. Die nach dem Verfahren der umgekehrten Suspensionspolymerisation hergestellten Produkte müssen getrocknet werden, z.B. durch azeotropes Entwässern, während bei den aus der Fällungspolymerisation stammenden Polymerisaten des N-Vinylformamids - sofern in Abwesenheit von Wasser polymerisiert wurde - eine Trocknung unterbleiben kann.

Die Abspaltung der Formylgruppe aus Poly-N-Vinylformamid wird vorzugsweise in einem inerten Suspensionsmittel durchgeführt, das die Polymerisatteilchen nicht löst. Solche Lösemittel sind beispielsweise Ether, wie Dioxan, Tetrahydrofuran, Diethylether, sowie aliphatische und aromatische Kohlenwasserstoffe, wie Pentan, Cyclohexan, Heptan, Octan, Isooctan, Dodecan, Toluol und Xylol.

Die Abspaltung der Formylgruppe kann auch in $C_1$- bis $C_8$-Alkoholen durchgeführt werden, wobei das Polymerisat solvolysiert wird und sich nach den Alkoholen entsprechend der Umsetzung mit den Formylgruppen des Polymerisats die zugehörigen Ameisensäureester bilden. $C_1$- bis $C_8$-Alkohole sind z.B. Methanol, Ethanol, n-Propanol, Isopropanol, n-Butanol, Isobutanol, tert.-Butanol und 2-Ethylhexanol. Vorzugsweise verwendet man $C_1$- bis $C_4$-Alkohole.

Die Alkoholyse kann auch in Gegenwart der oben genannten inerten Suspensionsmittel vorgenommen werden.

Die Teilchengröße des N-Vinylformamidpolymerisats beträgt 10 bis 1000, vorzugsweise 50 bis 400 µm. Die Abspaltung der Formylgruppe aus den Polymerisaten kann beispielsweise in einem Pulverbett vorgenommen werden, in dem man auf pulverförmige Polymerisate des N-Vinylformamids Halogenwasserstoffsäuren einwirken läßt und dabei für eine Durchmischung des Pulvers sorgt. Dies kann beispielsweise in einem Rührkessel oder einem Wirbelbett durchgeführt werden. Das dabei abgespaltene Kohlenmonoxid wird aus dem Abgas entfernt, während die überschüssige Halogenwasserstoffsäure in das Pulverbett zurückgeführt wird.

Vorzugsweise verwendet man als Lösemittel Dioxan, Tetrahydrofuran oder Cyclohexan. Die Polymerisatteilchen werden darin suspendiert und in dem Temperaturbereich von 20 bis 200, vorzugsweise 35 bis 150 °C der Einwirkung von Halogenwasserstoffsäuren, vorzugsweise Salzsäure, ausgesetzt. Pro Formylgruppenäquivalent im Poly-N-Vinylformamid benötigt man etwa 0,05 bis 10, vorzugsweise 0,1 bis 1,5 Äquivalente einer wasserfreien Halogenwasserstoffsäure (unter einem Äquivalent soll 1 g Äquivalent verstanden werden, das mit der Bezeichnung 1 Val identisch ist). In Abhängigkeit von der Konzentration an Halogenwasserstoffsäure und der Temperatur erhält man eine teilweise oder vollständige Abspaltung von Formylgruppen aus den pulverförmigen N-Vinylformamid-Polymerisaten. Bei einer partiellen Abspaltung von Formylgruppen erhält man Polymerisate, die Einheiten der Formel

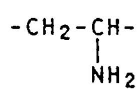 (I)

und der Formel

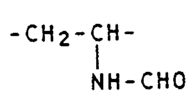 (II)

enthalten. Vorzugsweise wird die Abspaltung so geführt, daß ein Polymerisat anfällt, das 90 bis 10 Mol.% Einheiten der Formel (1) und 10 bis 90 Mol.% Einheiten der Formel (II) enthält. Derartige Polymerisate wie auch das Polyvinylamin eignen sich beispielsweise als Flockungsmittel für Abwässer und Schlämme sowie als Retentions-, Entwässerungshilfsmittel und Flockungsmittel bei der Herstellung von Papier.

Sofern die Abspaltung der Formylgruppe in Gegenwart eines Lösemittels vorgenommen wird und die Reaktionstemperatur oberhalb des Siedepunkts des Lösemittels liegt, wird die Reaktion in einem Autoklaven durchgeführt. Führt man die Abspaltung der Formylgruppe aus Poly-N-Vinylformamid in Gegenwart geringer Mengen an Wasser und Alkoholen durch, so erhält man anstelle von Kohlenmonoxid, Ameisensäure bzw. Ameisensäureester. Der K-Wert der Vinylamin-Einheiten enthaltenden Polymerisate entspricht etwa dem K-Wert der N-Vinylformamidpolymerisate. Der K-Wert der Polymerisate wurde nach H. Fikentscher, Cellulosechemie 13. 58-64 und 71-74 (1932). bei einer Polymerkonzentration von 0,5 Gew.% in 5 %iger wäßriger Kochsalzlösung bei einer Temperatur von 25 ° c gemessen; dabei bedeutet $K = k \cdot 10^3$.

Beispiel 1

In drei verschiedenen Ansätzen werden jeweils 7,1 g (100 mMol) eines wasserfreien Poly-N-Vinylformamid-Pulvers unter Rühren mit trockenem Chlorwasserstoff begast. Das Abgas wird durch eine Natronlaugewäsche geleitet, anschließend bestimmt man die Kohlenmonoxidmenge volumetrisch. In der Tabelle 1 sind die Raktionsbedingungen sowie der Hydrolysegrad und die Ausbeute an Polymerisat angegeben. Tabelle 2 enthält Angaben über den Teilchendurchmesser der Ausgangsprodukte.

Tabelle 1

| Beispiel 1 | K-Wert | HCl/h mH/h | Temp. (° C) | Reak.-Zeit (h) | Hydrolyse-grad (%) | CO (% d.Th.) | Ausbeute (g) |
|---|---|---|---|---|---|---|---|
| a | 29,3 | 72 | 115 | 7 | 50 | 100 | 7,5 |
| b | 87 | 82 | 115 | 6,5 | 62 | 87 | 7,5 |
| c | 122 | 112 | 110 | 4 | 34 | 100 | 7,4 |

Tabelle 2

| Beispiel 1 | > 160 µm | 160-100 µm | 100- 60 µm | < 60 µm |
|---|---|---|---|---|
| a | 16,6 % | 44 % | 22,5 % | 17 % |
| b | 5,6 % | 3 % | 8.4 % | 83 % |
| | > 300 µm | 300-200 µm | 200-100 µm | < 100 µm |
| c | 6.7 % | 39 % | 51,6 % | 2,8 % |

Beispiel 2

17,8 g (250 mmol) eines Poly-N-Vinylformamid-Pulvers vom K-Wert 30,8 und einem mittleren Teilchendurchmesser von 100 bis 300 µm werden in 82.2 g Dioxan suspendiert und nach dem Eingasen von 9.1 g (250 mmol) trockenem Chlorwasserstoff zwei Stunden unter Rühren auf eine Temperatur von 90 ° C erhitzt. Der Wassergehalt im Polymerisat beträgt 1 Gew.%, bezogen auf das eingesetzte Polymerisat. Nach dem Abkühlen wird das Reaktionsprodukt abfiltriert und das anhaftende Suspensionsmittel (Dioxan) unter vermindertem Druck entfernt. Man erhält 17,0 g eines Poly-N-Vinylformamids aus dem 12 % der Formylgruppen abgespalten sind.

Beispiel 3

100 g (1.406 mol) Poly-N-Vinvlformamid-Pulver (Teilchendurchmesser 100 bis 300 µm) werden jeweils in den in Tabelle 3 angegebenen Alkoholen suspendiert und bei den ebenfalls in Tabelle 3 angegebenen Bedingungen solvolisiert. Der Wassergehalt, bezogen auf Polymerisat, beträgt 1,5 Gew.%

Tabelle 3

| Beispiel 3 | K-Wert | Alkohol | | HCL (Mol) | Reak.-temp. (°C) | Reak.-Zeit (h) | Hydrolysegrad (%) | Ausbeute (g) |
|---|---|---|---|---|---|---|---|---|
| | | Art | Menge | | | | | |
| a | 140 | Methanol | 513 | 1,406 | 40 | 14 | 44 | 105,1 |
| b | 29,3 | Isopropanol | 910 | 3,173 | 84 | 3 | 28 | 103,2 |
| c | 93,4 | Isobutanol | 385 | 1,058 | 100 | 6 | 56 | 105 |
| d | 93,4 | Isobutanol | 373 | 0,702 | 80 | 3,3 | 26 | 102,5 |

Beispiel 4

In einem Autoklaven werden 113,6 g (1,566 mol) Poly-N-Vinylformamid-Pulver einer Teilchengröße von 100 bis 200 µm und einem K-Wert von 28 vorgelegt. Der Wassergehalt des Polymeren beträgt 2,1 Gew.%. Man gibt dann 71 g (0,96 mol) Isobutanol und 355 g Cyclohexan zu, verschließt den Autoklav und preßt bei Raumtemperatur 37,6 g (1,03 mol) gasförmigen Chlorwasserstoff auf und erhitzt den Autoklaveninhalt 4 Stunden auf eine Temperatur von 100°C. Es stellt sich ein Druck von maximal 1,7 bar ein. Nach dem Abkühlen trennt man das Pulver vom Suspensionsmittel, wäscht das Pulver und entfernt das anhaftende Suspensionsmittel unter vermindertem Druck. Man erhält 113 g eines Polymeren mit einem Hydrolysegrad von 71 %.

Beispiel 5

Wie in Beispiel 4 angegeben, legt man in einem Autoklaven 7,1 g (0,1 mol) einer Mischung aus 2,6 g eines Poly-N-Vinylformamid-Pulvers eines mittleren Durchmessers von 200 bis 300 µm und 4,5 g des gleichen Polymeren mit einem mittleren Durchmesser von 100 bis 200 µm in 355 g trockenem Cyclohexan zusammen mit 3,7 g (50 mmol) Isobutanol und 3,65 g (0,1 mol) Chlorwasserstoff vor und erhitzt den Autoklaveninhalt 4 Stunden auf eine Temperatur von 100°C. Der K-Wert der Polymerisate beträgt 142,5. Man erhält 7,65 g eines Poly-N-Vinylformamid-Pulvers, aus dem teilweise die Formylgruppen abgespalten sind. Wie aus Tabelle 4 hervorgeht, ist der Hydrolysegrad (HG) weitgehend unabhängig von der Korngröße des Polymeren.

Tabelle 4

| | |
|---|---|
| a) 0,46 g mit Körnung > 250 µm : | HG = 37 % |
| b) 6,65 g mit Körnung 125-250 µm : | HG = 44 % |
| c) 0,54 g mit Körnung < 125 µm : | HG = 42 % |

**Patentansprüche**

1. Verfahren zur Herstellung von pulverförmigen, linearen, basischen Polymerisaten, die Einheiten der Formel

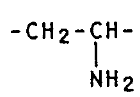

(I)

enthalten und einen K-Wert nach Fikentscher von 10 bis 250 (gemessen bei einer Polymerkonzentration von 0,5 Gew.% in 5 %iger wäßriger Kochsalzlösung bei 25°C) haben durch Abspaltung der Formylgruppe aus Polymerisaten des N-Vinylformamids ($CH_2$=CH-NH-CHO) in Gegenwart von Säuren

bei Temperaturen bis zu 200 ° C, dadurch gekennzeichnet, daß man pulverförmige Polymerisate des N-Vinylformamids in Gegenwart von höchstens 5 Gew.% Wasser, bezogen auf das eingesetzte Polymerisat, mit einer gasförmigen Halogenwasserstoffsäure zur Reaktion bringt.

2. Verfahren nach Anspruch 1, dadurch gekennzeichnet, daß man die Reaktion in Gegenwart von höchstens 2,5 Gew.% Wasser mit gasförmigem Chlorwasserstoff oder Bromwasserstoff vornimmt.

3. Verfahren nach den Ansprüchen 1 und 2, dadurch gekennzeichnet, daß man die Reaktion in Abwesenheit von Wasser durchführt.

4. Verfahren nach den Ansprüchen 1 bis 3, dadurch gekennzeichnet, daß man die Reaktion in Gegenwart eines inerten Suspensionsmittels durchführt, das die Polymerisatteilchen nicht löst.

5. Verfahren nach Anspruch 4, dadurch gekennzeichnet, daß man als Suspensionsmittel Dioxan, Tetrahydrofuran oder Cyclohexan einsetzt.

6. Verfahren nach den Ansprüchen 1 bis 3, dadurch gekennzeichnet, daß man die Abspaltung der Formylgruppe in einem $C_1$- bis $C_8$-Alkohol vornimmt.

7. Verfahren nach Anspruch 6, dadurch gekennzeichnet, daß man zusätzlich ein inertes Suspensionsmittel einsetzt.

8. Verfahren nach den Ansprüchen 1 bis 7, dadurch gekennzeichnet, daß die Teilchengröße des N-Vinylformamid-Polymerisats 10 bis 1000 µm beträgt.

9. Verfahren nach den Ansprüchen 1 bis 7, dadurch gekennzeichnet, daß die Teilchengröße des N-Vinylformamid-Polymerisats 50 bis 400 µm beträgt.

10. Verfahren nach den Ansprüchen 1 bis 9, dadurch gekennzeichnet, daß man die Reaktion bei Temperaturen von 35 bis 150 ° C durchführt.

## Claims

1. A process for the preparation of a linear, basic polymer powder which contains units of the formula

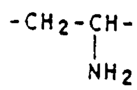

(I)

and has a Fikentscher K value of from 10 to 250 (measured at a polymer concentration of 0.5% by weight in 5% strength aqueous sodium chloride solution at 25 ° C), by eliminating the formyl groups from an N-vinylformamide ($CH_2$ = CH-NH-CHO) polymer in the presence of acids at up to 200 ° C, where the N-vinylformamide polymer powder is reacted in the presence of no more than 5% by weight of water, based on the polymer used, with a gaseous hydrogen halide.

2. A process as claimed in claim 1, wherein the reaction is carried out using gaseous hydrogen chloride or hydrogen bromide in the presence of not more than 2.5% by weight of water.

3. A process as claimed in claim 1 or 2, wherein the reaction is carried out in the absence of water.

4. A process as claimed in any of claims 1 to 3, wherein the reaction is carried out in the presence of an inert suspending agent which does not dissolve the polymer particles.

5. A process as claimed in claim 4, wherein the suspending agent used is dioxane, tetrahydrofuran or cyclohexane.

**6.** A process as claimed in any of claims 1 to 3, wherein elimination of the formyl group is carried out in a $C_1$-$C_8$-alcohol.

**7.** A process as claimed in claim 6, wherein an inert suspending agent is used in addition.

**8.** A process as claimed in any of claims 1 to 7, wherein the particle size of the N-vinylformamide polymer is from 10 to 1000 µm.

**9.** A process as claimed in any of claims 1 to 7, wherein the particle size of the N-vinylformamide polymer is from 50 to 400 µm.

**10.** A process as claimed in any of claims 1 to 9, wherein the reaction is carried out at from 35 to 150 °C.

**Revendications**

**1.** Procédé de préparation de polymères basiques, linéaires, pulvérulents, qui contiennent des unités qui répondent à la formule

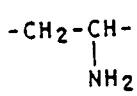

(I)

et qui possèdent une valeur K selon Fikentscher de 10 à 250 (valeur mesurée à une concentration en polymère de 0,5% en poids en solution aqueuse à 5% de sel de cuisine et à 25 °C), par séparation du groupe formyle de polymères du N-vinylformamide ($CH_2=CH\text{-}NH\text{-}CHO$), en présence d'acides, à des températures allant jusqu'à 200 °C, caractérisé en ce que l'on fait réagir des polymères pulvérulents du N-vinylformamide avec un acide halogénhydrique gazeux, en présence d'au maximum 5% en poids d'eau, par rapport au polymère mis en oeuvre.

**2.** Procédé suivant la revendication 1, caractérisé en ce que l'on entreprend la réaction avec l'acide chlorhydrique ou l'acide bromhydrique, gazeux, en présence d'au maximum 2,5% en poids d'eau.

**3.** Procédé suivant les revendications 1 et 2, caractérisé en ce que l'on réalise la réaction en l'absence d'eau.

**4.** Procédé suivant les revendications 1 à 3, caractérisé en ce que l'on entreprend la réaction en présence d'un agent de mise en suspension inerte, qui ne dissout pas les particules de polymère.

**5.** Procédé suivant la revendication 4, caractérisé en ce que l'on utilise du dioxanne, du tétrahydrofuranne ou du cyclohexane à titre d'agent de mise en suspension.

**6.** Procédé suivant la revendication 1 à 3, caractérisé en ce que l'on entreprend la séparation du radical formyle dans un alcool en $C_1$ à $C_8$.

**7.** Procédé suivant la revendication 6, caractérisé en ce que l'on utilise complémentairement un agent de mise en suspension inerte.

**8.** Procédé suivant les revendications 1 à 7, caractérisé en ce que le calibre des particules du polymère du N-vinylformamide varie de 10 à 1.000 µm.

**9.** Procédé suivant les revendications 1 à 7, caractérisé en ce que le calibre des particules du polymère du N-vinylformamide varie de 50 à 400 µm.

**10.** Procédé suivant les revendications 1 à 9, caractérisé en ce que l'on entreprend la réaction à des températures de 35 à 150 °C.